(19) Europäisches Patentamt
European Patent Office
Office européen des brevets

(11) EP 2 639 059 B1

(12) EUROPEAN PATENT SPECIFICATION

(45) Date of publication and mention of the grant of the patent:
**08.01.2020 Bulletin 2020/02**

(21) Application number: **11840574.5**

(22) Date of filing: **10.11.2011**

(51) Int Cl.:
***B32B 25/08*** *(2006.01)* ***B32B 1/08*** *(2006.01)*
***B32B 27/30*** *(2006.01)* ***F16L 11/04*** *(2006.01)*
***B32B 25/04*** *(2006.01)* ***B32B 25/14*** *(2006.01)*
***B32B 25/16*** *(2006.01)* ***B32B 27/08*** *(2006.01)*
***B32B 27/18*** *(2006.01)* ***B32B 27/26*** *(2006.01)*
***B32B 27/28*** *(2006.01)* ***B32B 27/32*** *(2006.01)*
***B32B 27/38*** *(2006.01)*

(86) International application number:
**PCT/JP2011/075923**

(87) International publication number:
**WO 2012/063893 (18.05.2012 Gazette 2012/20)**

(54) **LAMINATE BODY**

LAMINATKÖRPER

CORPS STRATIFIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.03.2011 JP 2011045942**
**12.11.2010 JP 2010254309**

(43) Date of publication of application:
**18.09.2013 Bulletin 2013/38**

(73) Proprietors:
- **Daikin Industries, Ltd.**
  **Osaka 530-8323 (JP)**
- **Osaka Soda Co., Ltd.**
  **Nishi-ku**
  **Osaka-shi,**
  **Osaka 550-0011 (JP)**

(72) Inventors:
- **MASUI,Toshiaki**
  **Settsu-shi**
  **Osaka 566-8585 (JP)**
- **INABA,Takeshi**
  **Settsu-shi**
  **Osaka 566-8585 (JP)**
- **KUWAJIMA,Yuuki**
  **Settsu-shi**
  **Osaka 566-8585 (JP)**
- **HAMAGUCHI,Koshiro**
  **Osaka-shi**
  **Osaka 550-0011 (JP)**
- **KITAGAWA,Motoki**
  **Osaka-shi**
  **Osaka 550-0011 (JP)**

(74) Representative: **Cabinet Beau de Loménie**
**158, rue de l'Université**
**75340 Paris Cedex 07 (FR)**

(56) References cited:
**WO-A1-2009/020182** **WO-A1-2009/020182**
**WO-A1-2009/096427** **WO-A1-2009/096427**
**JP-A- 2008 260 242** **US-A- 5 588 469**
**US-A- 6 106 914**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 639 059 B1

## Description

TECHNICAL FIELD

The present invention relates to a laminated body.

BACKGROUND ART

In light of a recent rise in environment consciousness, the establishment of laws for preventing the volatilization of fuel has been hitherto advanced. In particular, in the automobile industry, the volatilization of fuel has tended to be remarkably restrained centrally in the USA. Needs for material excellent in fuel barrier performance have been increasing.

About, in particular, fuel transporting rubber hoses, in order to make the fuel permeation resistance thereof good, laminated hoses are used in each of which a fluororesin is used for a barrier layer (rubber is used for others than the barrier layer). However, in accordance with recent intense requests for a decrease in burden onto the environment, the fuel low permeability based on the barrier layer is further required. As a means therefor, the barrier layer has been increased in thickness, or attempts have been made for keeping the low permeability by using a per-halogen type fluororesin, which is best in low permeability. However, the increase in the thickness of the barrier layer (fluororesin) causes an increase in the weight of the hoses. Moreover, a disadvantage is caused from the viewpoint of energy saving. Furthermore, the bendability (flexibility) of the hoses themselves is damaged so that a disadvantage is caused from the viewpoint of handleability (fittability).

When a per-halogen type fluororesin is used as the barrier layer, it is difficult to bond the resin to the outside and inside rubbers, which are partners. For example, the following step is required: a step of surface-treating the resin to improve the adhesive property; or a step of winding a film or tape onto the laminate. Thus, for example, the working process becomes complicated so that the productivity is remarkably declined and costs are largely increased. Such practical inconveniences are caused.

In order to improve the adhesion between the fluororesin layer and the rubber layer, known is a fuel hose in, for example, Patent Document 1, which has a layer structure having the following: a diene rubber layer obtained by adding, to a diene rubber such as NBR, a sulfur-containing vulcanizing agent, at least one of a carbamic acid metal salt and a thiazole metal salt, and magnesium oxide together with a DBU salt or the like; and a fluorovinylidene copolymer (THV) layer adjacent thereto.

As described in Patent Documents 2 and 3, it is known that the adhesive property of a curable elastomer compound onto a fluoropolymer layer is improved by using a fluoropolymer in which at least one (species) monomer containing plural hydrogen atoms is present, or a fluoropolymer essentially containing a fluorovinylidene, and mixing this polymer with a de-fluorohydrogen composition.

PRIOR ART DOCUMENTS

PATENT DOCUMENTS

Patent Document 1: JP-A-2007-261079
Patent Document 2: JP-A-2001-527104
Patent Document 3: JP-A-2001-526972
US patent 6, 106, 914, WO2009/096427A1 and WO 2009/020182A1 show laminated bodies according to the preamble of claim 1.

SUMMARY OF THE INVENTION

PROBLEMS TO BE SOLVED BY THE INVENTION

In the meantime, a fluorine-contained polymer having a copolymerization unit originating from chlorotrifluoroethylene is known as a fluororesin low in permeability. However, even when this fluorine-contained polymer is used as a fluororesin, the polymer cannot be bonded to epichlorohydrin rubber.

The present invention provides a laminated body in which a fluorine-contained polymer having a copolymerization unit originating from chlorotrifluoroethylene is strongly bonded to epichlorohydrin rubber.

MEANS FOR SOLVING THE PROBLEMS

The present invention relates to the laminated body of claim 1comprising a rubber layer (A) and a fluororesin layer (B) laminated over the rubber layer (A), wherein the rubber layer (A) is a layer comprising a rubber composition for vulcanization, the rubber composition for vulcanization comprises an epichlorohydrin rubber (a1), at least one compound (a2) selected from the group consisting of salts of 1,8-diazabicyclo(5.4.0) undecene-7, salts of 1,5-diazabicyclo(4.3.0)-nonene-5, 1,8-diazabicyclo(5.4.0) undecene-7, and 1,5-diazabicyclo(4.3.0)-nonene-5, an epoxy resin (a3), and at least one water-carrying substance (a4), and the fluororesin layer (B) is a layer comprising a fluorine-contained polymer composition and the fluorine-contained polymer composition comprises a fluorine-contained polymer (b1) having a copolymerization unit originating from chlorotrifluoroethylene, wherein the water-carrying substance (a4) is selected from a hydrate of a sulfate and/or acetate of a metal selected from calcium, magnesium, sodium and copper.
It is preferred that the rubber composition of the present invention for vulcanization further comprises a copper salt (a5) .

EFFECT OF THE INVENTION

In the case of laminating, for the laminated body of the present invention, its fluororesin layer and its rubber layer, these layers are chemically strongly bonded to each other without performing any especially complicated step when the rubber is vulcanized. Thus, for the bonding, no especial step is required, and these layers can be shaped at low costs. The shaping is easily attained. Additionally, the layers can be shaped by an ordinary method such as extrusion molding, so that the laminate can be made into a thin film, and is further improved in flexibility.

MODE FOR CARRYING OUT THE INVENTION

The laminated body of the present invention has a rubber layer (A) and a fluororesin layer (B) laminated over the rubber layer (A).
Hereinafter, each of the layers will be described.

(A) Rubber layer

The rubber layer (A) is a layer comprising a rubber composition for vulcanization.
The rubber composition for vulcanization contains, as essential components, an epichlorohydrin rubber (a1), a compound (a2), an epoxy resin (a3), and a water-carrying substance (a4), and further preferably contains a copper salt (a5). The composition may contain a vulcanizing agent (a6) as an optional component. When the rubber composition for vulcanization is particularly a composition containing the vulcanizing agent (a6) as well as the epichlorohydrin rubber (a1) and the compound (a2), the layers (A) and (B) can be bonded to each other with a larger adhesive strength.
The epichlorohydrin rubber (a1) is not particularly limited as far as the rubber is an unvulcanized rubber having a polymerization unit based on epichlorohydrin. The epichlorohydrin rubber (a1) may be a unary polymer made substantially of only a polymerization unit based on epichlorohydrin, or may be a binary or higher polymer made of a polymerization unit based on epichlorohydrin and a polymerization unit based on a monomer other than epichlorohydrin.
The monomer other than epichlorohydrin is preferably, for example, at least one monomer selected from the group consisting of ethylene oxide, propylene oxide, and allyl glycidyl ether. The rubber composition for vulcanization is preferably a polymer having a polymerization unit based on epichlorohydrin and a polymerization unit based on ethylene oxide, and is more preferably a polymer having a polymerization unit based on epichlorohydrin, a polymerization unit based on ethylene oxide, and a polymerization unit based on allyl glycidyl ether.
The epichlorohydrin rubber (a1) is preferably at least one polymer selected from the group consisting of epichlorohydrin homopolymer, epichlorohydrin / ethylene oxide copolymer, epichlorohydrin / allyl glycidyl ether copolymer, epichlorohydrin / ethylene oxide / allyl glycidyl ether copolymer, epichlorohydrin / propylene oxide copolymer, epichlorohydrin / propylene oxide / allyl glycidyl ether copolymer, and epichlorohydrin / ethylene oxide / propylene oxide / allyl glycidyl ether quaternary polymer. The epichlorohydrin rubber (a1) is more preferably at least one polymer selected from the group consisting of epichlorohydrin / ethylene oxide copolymer, and epichlorohydrin / ethylene oxide / allyl glycidyl ether copolymer. These may be used alone or in the form of a mixture of two or more thereof.
The compound (a2) is at least one compound selected from the group consisting of salts of 1,8-diazabicyclo(5.4.0) undecene-7, salts of 1,5-diazabicyclo(4.3.0)-nonene-5, 1,8-diazabicyclo(5.4.0) undecene-7, and 1,5-diazabicyclo(4.3.0)-nonene-5. When the rubber composition for vulcanization contains the compound (a2), the composition can be improved in vulcanization property and adhesive property.
The compound (a2) is preferably at least one compound selected from the group consisting of a p-toluenesulfonic acid salt of 1,8-diazabicyclo(5.4.0) undecene-7, a phenol salt of 1,8-diazabicyclo(5.4.0) undecene-7, a phenolic resin

salt of 1,8-diazabicyclo(5.4.0) undecene-7, an orthophthalic acid salt of 1,8-diazabicyclo(5.4.0) undecene-7, a formic acid salt of 1,8-diazabicyclo(5.4.0) undecene-7, an octylic acid salt of 1,8-diazabicyclo(5.4.0) undecene-7, a p-toluenesulfonic acid salt of 1,5-diazabicyclo(4.3.0)-nonene-5, a phenol salt of 1,5-diazabicyclo(4.3.0)-nonene-5, a phenolic resin salt of 1,5-diazabicyclo(4.3.0)-nonene-5, an orthophthalic acid salt of 1,5-diazabicyclo(4.3.0)-nonene-5, a formic acid salt of 1,5-diazabicyclo(4.3.0)-nonene-5, an octylic acid salt of 1,5-diazabicyclo(4.3.0)-nonene-5, 1,8-diazabicyclo(5.4.0) undecene-7, and 1,5-diazabicyclo(4.3.0)-nonene-5.

From the viewpoint of an improvement in the adhesive property, the compound (a2) is more preferably a phenol salt of 1,8-diazabicyclo(5.4.0) undecene-7.

From the viewpoint of goodness in the adhesive property, the amount of the compound (a2) is preferably from 0.3 to 3.0 parts both inclusive by mass for 100 parts by mass of the epichlorohydrin rubber (a1). The amount is more preferably from 0.5 to 2.0 parts both inclusive by mass. From the viewpoint of goodness in the adhesive property and good in the vulcanization property, the amount of the compound (a2) is preferably from 0.5 to 1.5 parts both inclusive by mass for 100 parts by mass of the epichlorohydrin rubber (a1).

The rubber composition for vulcanization contains the epoxy resin (a3). The epoxy resin (a3) is preferably, for example, at least one selected from the group consisting of bisphenol A type epoxy resin, bisphenol F type epoxy resin, phenol novolak type epoxy resin, o-cresol novolak type epoxy resin, amine type epoxy resin, hydrogenated bisphenol A type epoxy resin, and polyfunctional epoxy resin. Of these examples, bisphenol A type epoxy resin is preferred since the resin is good in chemical resistance and adhesive property. Furthermore, an epoxy resin represented by the following formula (1) is particularly used:

[Formula 1]

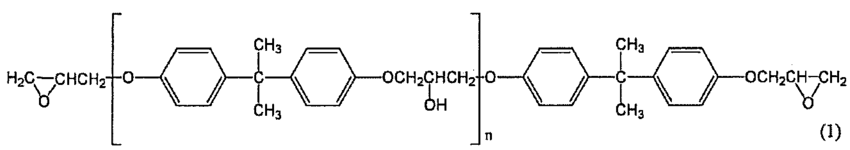

(1)

In the formula (1), n is a value of the average, and is preferably from 0.1 to 3, more preferably from 0.1 to 0.5, even more preferably from 0.1 to 0.3. If n is less than 0.1, the rubber layer (A) tends to be lowered in adhesive force onto the fluorine-contained polymer (b1). If n is more than 3, the epoxy resin itself tends to be raised in viscosity not to be evenly dispersed with ease in the rubber composition for vulcanization.

In order to make the rubber layer (A) better in adhesive force onto the fluorine-contained polymer (b1), the amount of the epoxy resin (a3) is preferably from 0.1 to 5 parts by mass, more preferably from 0.3 to 3 parts by mass for 100 parts by mass of the epichlorohydrin rubber (a1).

A preferred embodiment of the rubber composition for vulcanization is an embodiment in which the total amount of the compound (a2) and the epoxy resin (a3) is more than 2.0 parts by mass for 100 parts by mass of the epichlorohydrin rubber (a1).

Water-absorbed substances are each a compound in which water is absorbed and held and which is provided that the water is vaporized and released by heating the compound. Hydrated substances are each a compound having, in a structure thereof, water provided that water is generated and released by heating and decomposing the compound. The water-carrying substance (a4) is, from the viewpoint of the handleability thereof a metal salt hydrate. When the rubber layer (A) contains the water-carrying substance (a4), the layer can be improved in adhesive property.

Examples of water-absorbed substance(s) include a water-absorbed substance in which a polyether compound absorbs water, a water-absorbed substance in which a metal compound absorbs water. The absorption of each of the compounds is attained by the contact thereof with water (for example, the immersion thereof into water).

Examples of the polyether compound include polyethylene oxide and polyethylene glycol.

In order to improve the rubber layer (A) in adhesive property, the water-absorbed substance of the water-carrying substance (a4) is preferably a compound having an absorbed water hold ratio of 5% by weight or more. The water-absorbed substance is more preferably a compound having an absorbed water hold ratio of 10% by weight or more. The absorbed water hold ratio is the proportion of water held by the water-absorbed substance, and is calculated in accordance with the following:

Water-absorbed hold ratio (% by weight) = (amount (weight) of water held by the water-absorbed substance / water-absorbed substance (weight)) × 100

The hydrated substance of the water-carrying substance (a4) is a metal salt hydrate.

According to the invention the metal salt hydrate (a4) is a hydrate of a sulfate and/or an acetate of a metal selected from calcium, magnesium, sodium and copper. The hydrate is more preferably calcium sulfate dihydrate, sodium sulfate decahydrate, or copper (II) sulfate pentahydrate. The hydrate is in particular preferably calcium sulfate dihydrate and sodium sulfate decahydrate.

The blend amount of the water-carrying substance (a4) is from 0.1 to 80 parts by mass, preferably from 0.5 to 70 parts by mass, even more preferably from 1 to 50 parts by weight, in particular preferably from 1 to 20 parts by mass for 100 parts by mass of the epichlorohydrin rubber (a1). When the amount is in the range, a sufficient adhesion effect is favorably obtained without damaging mechanical properties of the vulcanized product.

It is preferred that the rubber composition for vulcanization further contains the copper salt (a5) to improve the rubber layer (A) in adhesive property.

The copper salt (a5) is preferably an organic copper salt. Examples of the organic copper salt include a copper salt of a saturated carboxylic acid such as formic acid, acetic acid, butyric acid, stearic acid and the like; a copper salt of an unsaturated carboxylic acid such as oleic acid, linoleic acid and the like; a copper salt of an aromatic carboxylic acid such as salicylic acid, benzoic acid, phthalic acid and the like; a copper salt of a dicarboxylic acid such as oxalic acid, succinic acid, adipic acid, maleic acid, fumaric acid and the like; a copper salt of a hydroxy acid such as lactic acid, citric acid and the like; a copper salt of a carbamic acid; a copper salt of a thiocarbamic acid, such as copper dimethyldithiocarbamate, copper diethyldithiocarbamate, copper dibutyldithiocarbamate, copper N-ethyl-N-phenyldithiocarbamate, copper N-pentamethylenedithiocarbamate, or copper dibenzyldithiocarbamate; and a copper salt of sulfonic acid. The organic copper salt is preferably a copper salt of a saturated carboxylic acid, a copper salt of an unsaturated carboxylic acid, a copper salt of an aromatic carboxylic acid or a copper salt of a thiocarbamic acid, and is more preferably copper stearate, copper dimethyldithiocarbamate, copper diethyldithiocarbamate, or copper dibutyldithiocarbamate.

From the viewpoint of an improvement in the adhesive property, the blend amount of the copper salt (a5) is from 0.01 to 5 parts by mass, preferably from 0.05 to 3 parts by mass for 100 parts by mass of the epichlorohydrin rubber (a1). The amount is more preferably from 0.1 to 2 parts by mass. When the amount is in the range, a sufficient adhesion effect is favorably obtained without damaging mechanical properties of the vulcanized product.

The rubber composition for vulcanization preferably contains the vulcanizing agent (a6). The vulcanizing agent may be a vulcanizing agent known conventionally which matches with a vulcanizing system of the rubber composition for vulcanization. By vulcanizing the epichlorohydrin rubber (a1), the resultant vulcanized rubber layer is improved in mechanical properties such as tensile strength. The layer can also gain a good elasticity.

Examples of the vulcanizing agent (a6) include known vulcanizing agents using the reactivity of a chlorine atom, such as polyamine vulcanizing agents, thiourea vulcanizing agents, thiadiazole vulcanizing agents, mercaptotriazine vulcanizing agents, pyrazine vulcanizing agents, quinoxaline vulcanizing agents, bisphenol vulcanizing agents and the like.

Examples of the known vulcanizing agents using the reactivity of a chlorine atom are given; examples of the polyamine vulcanizing agents include ethylenediamine, hexamethylenediamine, diethylenetriamine, triethylenetetramine, hexamethylenetetramine, p-phenylenediamine, cumenediamine, N,N'-dicinnamylidene-1,6-hexadiamine, ethylenediamine carbamate, hexamethylenediamine carbamate and the like.

Examples of the thiourea vulcanizing agents include ethylenethiourea, 1,3-diethylthiourea, 1,3-dibutylthiourea, trimethylthiourea and the like.

Examples of the thiadiazole vulcanizing agents include 2,5-dimercapto-1,3,4-thiadiazole, 2-mercapto-1,3,4-thiadiazole-5-thiobenzoate and the like.

Examples of the mercaptotriazine vulcanizing agents include 2,4,6-trimercapto-1,3,5-triazine, 2-methoxy-4,6-dimercaptotriazine, 2-hexylamino-4,6-dimercaptotriazine, 2-diethylamino-4,6-dimercaptotriazine, 2-cyclohexaneamino-4,6-dimercaptotriazine, 2-dibutylamino-4,6-dimercaptotriazine, 2-anilino-4,6-dimercaptotriazine, 2-phenylamino-4,6-dimercaptotriazine and the like.

Examples of the pyrazine vulcanizing agents include 2,3-dimercaptopyrazine derivatives and the like. Examples of the 2,3-dimercaptopyrazine derivatives include pyrazine-2,3-dithiocarbonate, 5-methyl-2,3-dimercaptopyrazine, 5-ethylpyrazine-2,3-dithiocarbonate, 5,6-dimethyl-2,3-dimercaptopyrazine, 5,6-dimethylpyrazine-2,3-dithiocarbonate and the like.

Examples of the quinoxaline vulcanizing agents include 2,3-dimercaptoquinoxaline derivatives and the like.

Examples of the 2,3-dimercaptoquinoxaline derivatives include quinoxaline-2,3-dithiocarbonate, 6-methylquinoxaline-2,3-dithiocarbonate, 6-ethyl-2,3-dimercaptoquinoxaline, 6-isopropylquinoxaline-2,3-dithiocarbonate, 5,8-dimethylquinoxaline-2,3-dithiocarbonate and the like.

Examples of the bisphenol vulcanizing agents include 4,4'-dihydroxydiphenylsulfoxide, 4,4'-dihydroxydiphenylsulfone (bisphenol S), 1,1-cyclohexylidene-bis(4-hydroxybenzene), 2-chloro-1,4-cyclohexylene-bis(4-hydroxybenzene), 2,2-isopropylidene-bis(4-hydroxybenzene) (bisphenol A), hexafluoroisopropylidene-bis(4-hydroxybenzene) (bisphenol AF), 2-fluoro-1,4-phenylene-bis(4-hydroxybenzene) and the like.

In the rubber composition for vulcanization, a known vulcanizing accelerator and retardant may be used together with the vulcanizing agent in the present invention. The vulcanizing accelerator used together with the known vulcanizing agent using the reactivity of a chlorine atom include primary, secondary and tertiary amines, organic acid salts or adducts of the amines, guanidine type promoters, thiuram type promoters, dithiocarbamic acid type promoters and the like. Examples of the retardant include N-cyclohexanethiophthalimide, zinc salts of dithiocarbamic acids and the like.

Examples of the vulcanizing accelerator are given; particularly preferred examples of the primary, secondary and tertiary amines include primary, secondary and tertiary amines each made from an aliphatic or cyclic aliphatic acid having 5 to 20 carbon atoms. Typical examples of the amines include n-hexylamine, octylamine, dibutylamine, tributyl amine, hexamethylenediamine and the like.

Examples of an organic acid to be combined with any one of the amines to form a salt include carboxylic acids, carbamic acids, 2-mercaptobenzothiazole, dithiophosphoric acid and the like. Examples of a substance to be combined with any one of the amines to form an adduct include alcohols, oximes and the like. Examples of the organic acid salts or the adducts of the amines include a n-butylamine / acetate salt, a hexamethylenediamine / carbamate salt, a dicyclohexylamine salt of 2-mercaptobenzothiazole and the like.

Examples of the guanidine type promoters include diphenylguanidine, ditolylguanidine and the like.

Examples of the thiuram type vulcanizing accelerators include tetramethylthiuram disulfide, tetramethylthiuram monosulfide, tetraethylthiuram disulfide, tetrabutylthiuram disulfide, dipentamethylenethiuram tetrasulfide and the like.

Examples of the dithiocarbamic acid type promoters include a piperidine salt of pentamethylenedithiocarbamate and the like.

The blend amount of the vulcanizing accelerator or retardant used together with the known vulcanizing agent using the reactivity of a chlorine atom is preferably from 0 to 10 parts by weight, more preferably from 0.1 to 5 parts by weight for 100 parts by weight of the rubber component.

When the epichlorohydrin rubber (a1) is a polymer having a double bond, such as epichlorohydrin / allyl glycidyl ether copolymer, or epichlorohydrin / ethylene oxide / allyl glycidyl ether terpolymer, for example, the following may be used: a vulcanizing agent, a vulcanizing accelerator, a vulcanization retardant, a vulcanization promotion auxiliary, and/or a crosslinking auxiliary that is/are known and ordinarily used to vulcanize nitrile rubber. Examples of the vulcanizing agent include sulfur-containing vulcanizing agents such as sulfur, morpholine disulfide, tetramethylthiuram disulfide, tetraethylthiuram disulfide, tetrabutylthiuram disulfide, N,N'-dimethyl-N,N'-diphenylthiuram disulfide, dipentanemethylenethiuram tetrasulfide, dipentamethylenethiuram tetrasulfide, dipentamethylenethiuram hexasulfide and the like; peroxide vulcanizing agents such as tert-butyl hydroperoxide, p-menthane hydroperoxide, dicumyl peroxide, tert-butyl peroxide, 1,3-bis(tert-butylperoxyisopropyl)benzene, 2,5-dimethyl-2,5-di(tert-butylperoxy)hexane, benzoyl peroxide, tert-butyl peroxybenzoate and the like; resin vulcanizing agents such as alkylphenol formaldehyde resin and the like; quinone dioxime vulcanizing agents such as p-quinone dioxime, p-p'-dibenzoylquinone dioxime and the like, and the like. These vulcanizing agents may be used alone or in the form of a mixture of two or more thereof . Examples of the vulcanizing accelerator, the vulcanization retardant, the vulcanization promotion auxiliary, and the crosslinking auxiliary are given; the vulcanizing accelerator may be a vulcanizing accelerator of various types, such as any aldehyde ammonia promoter, aldehyde amine promoter, thiourea promoter, guanidine promoter, thioazole promoter, sulfeneamide promoter, thiuram promoter, dithiocarbomic acid salt promoter, xanthogenic acid salt promoter and the like; the vulcanization retardant may be N-nitrosodiphenylamine, phthalic anhydride, N-cyclohexylthiophtalimide and the like; the vulcanization promotion auxiliary may be zinc flower, stearic acid, zinc stearate and the like; and the crosslinking auxiliary may be any quinone dioxime crosslinking auxiliary, any methacrylate crosslinking auxiliary, any allyl crosslinking auxiliary, any maleimide crosslinking auxiliary and the like, and the like.

For the heat resistance of the epichlorohydrin rubber (a1), and the adhesive property between the rubber layer (A) and the fluororesin layer (B), the vulcanizing agent is preferably at least one vulcanizing agent (a6) selected from the group consisting of thiourea vulcanizing agents, quinoxaline vulcanizing agents, sulfur-containing vulcanizing agents, peroxide vulcanizing agents, and bisphenol vulcanizing agents, and is more preferably at least one vulcanizing agent selected from the group consisting of thiourea vulcanizing agents, quinoxaline vulcanizing agents, and bisphenol vulcanizing agents. Particularly preferred are quinoxaline vulcanizing agents. These vulcanizing agents may be used alone or in the form of a mixture of two or more thereof.

The rubber composition for vulcanization contains the vulcanizing agent (a6) preferably in an amount of 0.1 to 10 parts by weight for 100 parts by weight of the epichlorohydrin rubber (a1). The amount of the vulcanizing agent (a6)

is more preferably from 0.5 to 5 parts by weight. If the amount of the vulcanizing agent is less than 0.1 parts by weight, the crosslinking effect may become insufficient. If the amount is more than 10 parts by weight, a shaped body obtained by shaping the laminated body of the present invention may become too rigid to obtain practical rubber properties.

A preferred embodiment of the rubber composition for vulcanization is also an embodiment in which the composition further contains a peroxide vulcanizing agent besides at least one selected from the group consisting of thiourea vulcanizing agents, quinoxaline vulcanizing agents, and bisphenol vulcanizing agents. The peroxide vulcanizing agent is preferably dicumyl peroxide. The amount of the peroxide vulcanizing agent is preferably 1.0 part by mass or more, more preferably 2.0 parts by mass or more for 100 parts by mass of the epichlorohydrin rubber (a1). The amount is also preferably 5.0 parts by mass or less therefor. For example, when the content by percentage of the compound (a2) or the epoxy resin (a3) is small in the rubber composition for vulcanization, the rubber layer (A) may not gain a good adhesive property. However, even when the content by percentage of the compound (a2) or the epoxy resin (a3) is small, the incorporation of the peroxide vulcanizing agent makes it possible to make the layer (A) good in adhesive property onto the fluororesin layer (B).

The rubber composition for vulcanization preferably contains no amine compound since an amine compound may hinder the vulcanization property or damage the rubber properties.

The rubber composition for vulcanization may further contain a resin other than epoxy resin to give a property different from that of the epichlorohydrin rubber (a1) to the rubber layer (A). Examples of the resin include polymethyl methacrylate (PMMA) resin, polystyrene (PS) resin, polyurethane (PUR) resin, polyvinyl chloride (PVC) resin, ethylene / vinyl acetate (EVA) resin, styrene / acrylonitrile (AS) resin, polyethylene (PE) resin, chlorinated polystyrene, and chlorosulfonated polystyrene. In this case, the blend amount of the resin is preferably from 1 to 50 parts by mass for 100 parts by mass of the epichlorohydrin rubber (a1).

In accordance with purpose or need, ordinary additives blendable into ordinary rubber composition for vulcanization may be blended into the present invention, examples thereof including a filler, an acid-receiving agent, a working auxiliary, a plasticizer, a softener, an anti-ageing agent, a colorant, a stabilizer, an adhesive auxiliary, a releasing agent, an electric conductive agent, a thermal conductive agent, a surface non-adhesive agent, an adhesive, a flexibilizer, a heat resistance improver, a flame retardant, an ultraviolet absorber, an oil resistance improver, a foaming agent, a scorch preventive, a lubricant, and various other additives. Ordinary vulcanizing agents and vulcanizing accelerators different from those described above may be blended thereinto alone or in combination of two or more thereof. However, these additives may be blended in an amount not permitting the adhesive power onto the fluororesin layer (B), which is a purpose of the present invention, to be damaged.

Examples of the filler include metal sulfides such as molybdenum disulfide, iron sulfide, copper sulfide and the like, diatomaceous earth, asbestos, lithopone (zinc sulfide / barium sulfide), graphite, carbon black, carbon fluoride, calcium fluoride, coke, fine quartz particles, talc, clay, mica powder, wollastonite, carbon fiber, aramide fiber, various whiskers, glass fiber, organic reinforcing agents, organic fillers and the like.

Examples of the working auxiliary include higher aliphatic acids such as stearic acid, oleic acid, palmitic acid, lauric acid and the like; higher aliphatic acid salts such as sodium stearate, zinc stearate and the like; higher aliphatic acid amides such as stearic amide, oleic amide and the like; higher aliphatic acid esters such as ethyl oleate and the like; higher aliphatic amines such as stearylamine, oleylamine and the like; petroleum waxes such as carnauba wax, ceresin wax and the like; polyglycols such as ethylene glycol, glycerin, diethylene glycol and the like; aliphatic hydrocarbons such as Vaseline, paraffin and the like; and silicone oils, silicone polymers, low molecular weight polyethylene, phthalic acid esters, phosphoric acid esters, rosin, (halogenated) dialkylamines, (halogenated) dialkylsulfones, surfactants and the like.

Examples of the plasticizer include phthalic acid derivatives, and sebacic acid derivatives; examples of the softener include lubricant oils, process oil, coal tar, castor oil, and calcium stearate; and examples of the anti-aging agent include phenylenediamines, phosphates, quinolines, cresols, phenols, dithiocarbamate metal salts and the like.

The rubber composition for vulcanization is prepared by mixing and kneading the epichlorohydrin rubber (a1), the compound (a2), the epoxy resin (a3) and the water-carrying substance (a4) with each other, preferably mixing and kneading the copper salt (a5) further therewith, and optionally mixing and kneading the vulcanizing agent (a6) and the other additives further therewith.

The mixing and kneading may be attained, using, for example, an open roll, a Banbury mixer, or a pressurizing kneader at a temperature of 100°C or lower.

The following will describe the fluororesin layer (B) in the laminated body of the present invention.

(B) fluororesin layer

The fluororesin layer (B) is a layer comprising a fluorine-contained polymer composition.

The fluorine-contained polymer composition contains at least a fluorine-contained polymer (b1) having a copolymerization unit originating from chlorotrifluoroethylene.

From the viewpoint of fuel-barrier performance, the fluorine-contained polymer (b1) is preferably a fluororesin, and is preferably at least one selected from the group consisting of polychlorotrifluoroethylene (PCTFE), and CTFE copolymer.

The CTFE copolymer preferably contains a copolymerization unit (CTFE unit) originating from CTFE and a copolymerization unit originating from at least one selected from the group consisting of the following: tetrafluoroethylene (TFE); hexafluoropropylene (HFP); perfluoro(alkyl vinyl ether) (PAVE); vinylidene fluoride (VdF); vinyl fluoride; hexafluoroisobutene; a monomer represented by the following formula:

$$CH_2=CX^1(CF_2)_nX^2$$

wherein $X^1$ is H or F, $X^2$ is H, F or Cl, and n is an integer of 1 to 10; ethylene; propylene; 1-butene; 2-butene; vinyl chloride; and vinylidene chloride. The CTFE copolymer is more preferably a perhalo-polymer.

The CTFE copolymer more preferably contains a CTFE unit, and a copolymerization unit originating from at least one monomer selected from the group consisting of TFE, HFP, and PAVE, and is more preferably made substantially of only the copolymerization unit(s). It is preferred that the CTFE copolymer does not contain a monomer having a CH bond, such as ethylene, vinylidene fluoride, vinyl fluoride and the like, to make the fluororesin layer (B) low in fuel permeability. It is usually difficult that any perhalo-polymer is bonded to rubber; however, according to the structure of the present invention, the interlayer adhesion between the fluororesin layer and the rubber layer is strong even when the fluororesin layer is a layer which is a perhalo-polymer layer.

The CTFE copolymer preferably has CTFE units in a proportion of 10 to 90% by mole of the entire monomer units.

The CTFE copolymer is in particular preferably a copolymer containing a CTFE unit, a TFE unit, and a monomer ($\alpha$) unit originating from a monomer ($\alpha$) copolymerizable with these units.

In the molecular structure of the CTFE copolymer, the "CTFE unit", and the "TFE" unit are, respectively, a moiety ($-CFCl-CF_2-$) originating from CTFE, and a moiety ($-CF_2-CF_2-$) originating from TFE. Similarly, in the molecular structure of the CTFE copolymer, the "monomer ($\alpha$) unit" is a moiety to which the monomer ($\alpha$) is added.

The monomer ($\alpha$) is not particularly limited as far as the monomer is a monomer copolymerizable with CTFE and TFE. The monomer may be, for example, ethylene (Et) ; vinylidene fluoride (VdF); a perfluoro(alkyl vinyl ether) (PAVE) represented by $CF_2=CF-ORf^1$ wherein $Rf^1$ is a perfluoroalkyl group having 1 to 8 carbon atoms; a vinyl monomer represented by $CX^3X^4=CX^5(CF_2)_nX^6$ wherein $X^3$, $X^4$ and $X^5$ may be the same or different and are each a hydrogen atom or a fluorine atom, and $X^6$ is a hydrogen atom, a fluorine atom or a chlorine atom, and n is an integer of 1 to 10; or an alkyl perfluorovinyl ether derivative represented by $CF_2=CF-OCH_2-Rf^2$ wherein $Rf^2$ is a perfuoroalkyl group having 1 to 5 carbon atoms. The monomer is in particular preferably at least one selected from the group consisting of the vinyl monomer and the alkyl perfluorovinyl ether derivative described above, and is more preferably at least one selected from the group consisting of PAVE and HFP.

The alkyl perfluorovinyl ether derivative is preferably a derivative in which $Rf^2$ is a perfluoroalkyl group having 1 to 3 carbon atoms, more preferably $CF_2=CF-OCH_2-CF_2CF_3$.

About the ratio between CTFE units and TFE units in the CTFE copolymer, the proportion of the CTFE units is from 15 to 90% by mole while that of the TFE units is from 85 to 10% by mole. More preferably, the proportion of the CTFE units is from 20 to 90% by mole while that of the TFE units is from 80 to 10% by mole. More preferred is a copolymer composed of 15 to 25% by mole of CTFE units, and 85 to 75% by mole of TFE units.

The CTFE copolymer is preferably a copolymer in which the total proportion of CTFE units and TFE units is from 90 to 99.9% by mole and the proportion of monomer ($\alpha$) units is from 0.1 to 10% by mole. If the proportion of monomer ($\alpha$) units is less than 0.1% by mole, the fluororesin layer (B) is liable to be poor in shapability, environment-stress crack resistance, and fuel crack resistance. If the proportion is more than 10% by mole, the fluororesin layer (B) tends to be poor in fuel low permeability, heat resistance and mechanical properties.

The fluorine-contained polymer (b1) is most preferably PCTFE, or CTFE / TFE / PAVE copolymer. The CTFE / TFE / PAVE copolymer is a copolymer composed substantially of only CTFE, TFE and PAVE. PCTFE, and the CTFE / TFE / PAVE copolymer do not each have a hydrogen atom bonded directly to any carbon atom constituting the main chain, so that the defluorohydrogenation thereof does not advance. It is therefore impossible to use a conventional adhesive-property-improving method using an unsaturated bond formed in a fluorine-contained polymer by defluorohydrogenation reaction.

Examples of PAVE include perfluoro(methyl vinyl ether) (PMVE), perfluoro (ethyl vinyl ether) (PEVE), perfluoro (propyl vinyl ether) (PPVE), and perfluoro(butyl vinyl ether). Of these examples, preferred is at least one selected from the group consisting of PMVE, PEVE and PPVE.

The proportion of units of PAVE is preferably 0.5% by mole or more of the total monomer units, and 5% by mole or less thereof.

The respective proportions of the CTFE units and the other constituting units are values obtained by performing $^{19}F$-NMR spectrometry.

The fluorine-contained polymer (b1) may be a polymer in which at least one reactive functional group selected from the group consisting of carbonyl groups, a hydroxyl group, heterocyclic groups and amino groups is introduced into a main chain terminal and/or a side chain of the polymer.

In the present specification, the "carbonyl groups" are each a bivalent carbon group constituted by a carbon-oxygen double bond, and a typical example thereof is a group represented by -C(=O)-. The reactive functional group containing any one of the carbonyl groups is not particularly limited. Examples thereof include a carbonate group, a carboxylic halide group (halogenoformyl group), a formyl group, a carboxyl group, an ester bond (-C(=O)O-), an acid anhydride bond (-C(=O)O-C(=O)-), an isocyanate group, an amide group, an imide group (-C(=O)-NH-C(=O)-), a urethane bond (-NH-C(=O)O-), a carbamoyl group ($NH_2$-C(=O)-), a carbamoyloxyl group ($NH_2$-C(=O)O-), a ureido group ($NH_2$-C(=O)-NH-), an oxamoyl group ($NH_2$-C(=O)-C(=O)-), and other groups each having, in a chemical structure thereof, a carbonyl group.

About, for example, the amide, imide, carbamoyl, carbamoyloxy, ureido and oxamoyl groups, and the urethane bond, a hydrogen atom bonded to their nitrogen atom may be substituted with a hydrocarbon group such as an alkyl group and the like.

The reactive functional group is preferably an amide, carbamoyl, hydroxyl, carboxyl, carbonate or halogen carbonate group, or an acid anhydride bond, and is more preferably an amide, carbamoyl, hydroxyl, carbonate or halogen carbonate group, or an acid anhydride bond since the group is easily introduced, and the fluorine-contained polymer (b1) has an appropriate heat resistance and a good adhesive property at relatively low temperatures.

The fluorine-contained polymer (b1) may be obtained by a polymerization method known conventionally, such as suspension polymerization, solution polymerization, emulsion polymerization, or bulk polymerization. In the polymerization, individual conditions such as temperature and pressure, and a polymerization initiator and other additives therefor may be appropriately decided in accordance with the composition and the amount of the fluorine-contained polymer (b1).

The melting point of the fluorine-contained polymer (b1) is not particularly limited, and is preferably from 160 to 270°C.

The melting point of the fluorine-contained polymer (b1) is obtained as a temperature corresponding to the maximum value in a melting heat curve obtained when the polymer temperature is raised at a rate of 10°C/minute, using a DSC instrument (manufactured by Seiko Instruments Ltd.). About the MFR thereof, a Melt Indexer (manufactured by Toyo Seiki Seisaku-sho, Ltd.) is used to measure the weight (g) of the polymer flowing out, per unit period (10 minutes), from its nozzle having a diameter of 2 mm and a length of 8 mm under a load of 5 kg at each temperature.

The molecular weight of the fluorine-contained polymer (b1) is preferably within a range of values permitting a shaped body obtained therefrom to exhibit good mechanical properties, fuel low permeability, and others. In the case of using, for example, the melt flow rate (MFR) as an index of the molecular weight, the MFR is preferably from 0.5 to 100 g/10 minutes at any temperature within the range of about 230 to 350°C, which is an ordinary temperature range in which fluorine-contained polymer is shapable. The MFR is more preferably from 2 to 50 g/10 minutes, more preferably from 5 to 35 g/10 minutes.

The fluororesin layer (B) in the present invention may be a layer containing one species of the fluorine-contained polymer (b1), or a layer containing two or more species thereof.

When the laminated body of the present invention is used as a constituting-material around fuel, the fuel permeability coefficient of the fluororesin layer (B) in the laminated body is preferably 1.0 g-mm/$m^2$/day or less, more preferably 0.6 g-mm/$m^2$/day or less, even more preferably 0.4 g-mm/$m^2$/day or less.

About the fuel permeability coefficient, a sheet obtained from a resin to be measured is put into a fuel permeability coefficient measuring cup in which an isooctane / toluene / ethanol mixed solvent is charged, this solvent being obtained by mixing isooctane, toluene and ethanol with each other at a ratio by volume of 45/45/10; and subsequently a change in the mass of the resultant system is measured at 60°C and then the coefficient is calculated out from the mass change.

When the fluorine-contained polymer (b1) is a polymer having at its terminal a specific reactive functional group in the present invention, the fluororesin layer (B) is improved in adhesive property onto the rubber layer (A). It is therefore possible to provide a shaped product (such as a tank for fuel) excellent in impact resistance and strength.

When the fluorine-contained polymer (b1) is a per-halo polymer, the product becomes better in chemical resistance and fuel low permeability. The per-halo polymer is a polymer in which halogen atoms are bonded, respectively, to all carbon atoms constituting a main chain of the polymer.

The fluororesin layer (B) may be a layer into which a filler that may be of various types may be blended in accordance with purpose or usage . Examples of the filler include inorganic powder, glass fiber, carbon powder, carbon fiber, and metal oxides.

For example, in order to decrease the laminated body further in fuel permeability, the following may be added thereto: a smectite type lamellar clay mineral such as montmorillonite, beidellite, saponite, nontronite, hectorite, sauconite, stevensite and the like; or a finely-lamellar mineral having a high aspect ratio, such as mica and the like.

In order to give electroconductivity thereto, an electroconductive filler may be added thereto. The electroconductive filler is not particularly limited, and may be, for example, powder or fiber of an electroconductive simple substance such as a metal, carbon and the like; powder of an electroconductive compound such as zinc oxide and the like; or surface electroconducting treated powder and the like. When the electroconductive filler is blended, it is preferred to melt and knead the raw material of the filler to form pellets beforehand.

The electroconductive simple substance powder or electroconductive simple substance fiber is not particularly limited. Examples thereof include powder of a metal such as copper, nickel and the like; fiber of a metal such as iron, stainless steel and the like; carbon black or carbon fiber; and carbon fibril described in JP-A-3-174018, and others.

The surface electroconducting treated powder is a powder obtained by subjecting the surface of non-electroconductive powder of glass beads, titanium oxide or some other to electroconducting treatment.

The method for the surface electroconducting treatment is not particularly limited, and may be, for example, metal sputtering, electroless plating or the like.

Of the electroconductive fillers, carbon black is preferably used since the substance is advantageous for economical efficiency and the prevention of the accumulation of static charge.

The volume resistivity of the fluorine-contained polymer composition into which the electroconductive filler is blended is preferably from $1 \times 10^\circ$ to $1 \times 10^9$ Ω·cm. The lower limit thereof is more preferably $1 \times 10^2$ Ω·cm. The higher limit thereof is more preferably $1 \times 10^8$ Ω·cm.

Besides the filler, any additive may be blended, examples thereof including a thermal stabilizer, a reinforcing agent, an ultraviolet absorbent, a pigment, or some other.

The laminated body of the present invention can be produced by laminating the rubber layer (A) and the fluororesin layer (B) over each other. In the laminated body of the present invention, its rubber layer (A) and another rubber layer (A) may be laminated on both sides of its fluororesin layer (B), respectively; or its fluororesin layer (B) and another fluororesin layer (B) may be laminated on both sides of its rubber layer (A), respectively. Its rubber layer (A) may be laminated on a single side of its fluororesin layer (B).

The lamination of any one of the rubber layers (A) and any one of the fluororesin layers (B) may be attained by any one of a method of shaping the corresponding raw materials separately into the rubber layer (A) and the fluororesin layer (B), respectively, and then laminating the layers in a manner such as compression; a method of shaping the same materials simultaneously into the rubber layer (A) and the fluororesin layer (B) to laminate these layers; and a method of applying the fluororesin layer (B) onto the rubber layer (A).

In the method of shaping the raw materials separately into the rubber layer (A) and the fluororesin layer (B), respectively, and then laminating the layers in a manner such as compression and the like, it is allowable to adopt a method of shaping the fluorine-contained polymer alone, and a method of shaping the rubber composition for vulcanization alone.

In the shaping into the rubber layer (A), the rubber composition for vulcanization may be made into a shaped body which may be in various forms such as a sheet form, a tubular form and the like by heating compression molding, transfer molding, extrusion molding, injection molding, calendering, coating, or some other method.

The shaping into the fluororesin layer (B) may be attained by heating compression molding, melt extrusion molding, injection molding, coating (examples thereof include powder coating), or some other method. In the shaping, an ordinarily-used machine for fluorine-contained polymer shaping may be used, examples thereof including an injection molding machine, a blow molding machine, an extrusion molding machine, and various coating machines. Thus, laminate bodies in various forms, such as a sheet form and a tubular form, can be produced. Of these molding methods, melt extrusion molding is preferred from the viewpoint of good productivity.

The method for shaping the raw materials into the rubber layer (A) and the fluororesin layer (B) simultaneously to laminate these layers may be a method of using the rubber composition for vulcanization for forming the rubber layer (A), and the fluorine-contained polymer (b1) for forming the fluororesin layer (B) to attain the shaping simultaneously with the laminating by multi-layer compression molding, multi-layer transfer molding, multi-layer extrusion molding, multi-layer injection molding, a doubling method, or some other method. According to this method, the rubber layer (A), which is an unvulcanized shaped body, and the fluororesin layer (B) can be simultaneously laminated onto each other; thus, it is not especially necessary to use any step of causing the rubber layer (A) and the fluororesin layer (B) to adhere closely onto each other. Moreover, this method is suitable for gaining a strong adhesion therebetween in a subsequent vulcanizing step.

The laminated body of the present invention may be a laminated body of the rubber layer (A) which is in an unvulcanized state, and the fluororesin layer (B). By vulcanizing this unvulcanized laminated body, these layers can gain a strong interlayer adhesive force.

Accordingly, the present invention also relates to a laminated body obtained by vulcanizing the unvulcanized laminated body of the present invention, in which a rubber layer (A1) obtained by vulcanizing the rubber layer (A) is bonded to the fluororesin layer (B) by the vulcanization (hereinafter, this laminated body may be referred to as the "vulcanized laminated body").

For the vulcanizing treatment, a method and conditions known conventionally for vulcanizing a rubber composition for vulcanization may be adopted. Examples of the method include a method of vulcanizing the unvulcanized laminated body for a long period, and a method of subjecting the unvulcanized laminated body to heating treatment as a pre-treatment for a relatively short period (the vulcanization of the body is also caused), and subsequently vulcanizing the laminated body over a long period. Of these methods, preferred is the method of subj ecting the unvulcanized laminated body to heating treatment as a pre-treatment for a relatively short period, and subsequently vulcanizing the laminated body over a long period since a close adhesion is easily attained between the rubber layer (A) and the fluororesin layer (B) in the pre-treatment and further the rubber layer (A) is already vulcanized in the pre-treatment to have a stable shape, so that a method for holding the laminated body in the subsequent vulcanization can be selected form various methods.

Conditions for the vulcanization treatment are not particularly limited, and may be ordinary conditions. It is preferred to conduct the treatment at 160 to 170°C for 10 to 80 minutes, using, for example, steam, a press, an oven, an air bath, infrared rays, microwaves, lead-covering vulcanization or the like. The treatment is more preferably conducted at 160°C for 20 to 45 minutes.

In the resultant vulcanized laminated body, the vulcanized rubber layer (A1) and the fluororesin layer (B) are bonded to each other by the vulcanization, so that a strong interlayer adhesive force is generated therebetween.

The laminated body of the present invention (each of the unvulcanized laminated body and the vulcanized laminated body thereof) has a bi-layered structure of its rubber layer (A or A1; hereinafter, the rubber layer (A) is a representative of the layers A and A1), and its fluororesin layer (B), or a tri-layered structure such as (A)-(B)-(A), or (B)-(A)-(B). The laminated body may have a tri-layered structure in which a polymer (C) other than the rubber layer (A) and the fluororesin layer (B) is bonded to either one thereof, or a higher multi-layered structure. The tri-layered structure of (A)-(B)-(C) is also a preferred embodiment. In the laminated body of the present invention, it is allowable that the rubber layer (A) is laminated on one of both sides of the fluororesin layer (B), and further the polymer layer (C) other than the rubber layer (A) and the fluororesin layer (B) is laminated on the other side; or that the rubber layer (A) and another rubber layer (A) are laminated on both the side of the fluororesin layer (B), respectively, and further the polymer layer (C) other than the fluororesin layer (B), and/or another polymer layer (C) is/are laminated on a single side thereof or both sides thereof, respectively.

The polymer layers (C) may be each a rubber layer (C1) other than the rubber layers (A). The laminated body may have one or two of the layers C on a single side of the outside of the layers (A) of the layers (A) - (B) - (A), or both sides thereof, respectively.

The material of the rubber layer (C1) is, for example, a rubber other than epichlorohydrin rubber. The material may be a fluorine-contained rubber or a fluorine-free rubber. From the viewpoint of fuel resistance and fuel barrier performance, the material is preferably a fluorine-contained rubber. From the viewpoint of a good cold resistance and low costs, the material is a fluorine-free rubber.

Specific examples of the fluorine-free rubber include diene rubbers such as acrylonitrile / butadiene rubber (NBR), or a hydrogenated product thereof (HNBR), styrene / butadiene rubber (SBR), chloroprene rubber (CR), butadiene rubber (BR), natural rubber (NR), isoprene rubber (IR) and the like; ethylene / propylene / termonomer copolymer rubber, silicone rubber, butyl rubber, acrylic rubber and the like.

The fluorine-free rubber is preferably any diene rubber since the rubber is good in heat resistance, oil resistance, weather resistance and extrusion moldability. The rubber is more preferably NBR or HNBR. The polymer (C) is preferably made of acrylonitrile / butadiene rubber, or a hydrogenated product thereof.

A vulcanizing agent, and other compounding agents may be blended also into the unvulcanized rubber composition which forms the rubber layer (C1).

The following will describe the layer structure of the laminated body of the present invention.

(1) Bi-layered structure of rubber layer (A) -fluororesin layer (B)

This structure is a basic structure. As described above, when a fluororesin layer (B) and a rubber layer (A) are conventionally laminated onto each other, steps therefor are liable to become complicated since the adhesion between the layers (fluororesin layer / the rubber layer) is insufficient, the steps being, for example, steps of surface-treating the resin side, of applying an adhesive separately onto the surfaces between the layers, and of winding a tape-form film onto the laminate to fix the two layers to each other. However, by vulcanizing the rubber composition without performing such complicated steps, the layers are bonded to each other by the vulcanization so that a chemically strong adhesion is attained.

(2) Tri-layered structure of rubber layer-fluororesin layer (B)-rubber layer

This structure is classified into (A)-(B)-(A), and (B)-(A)-(C1). When sealability is required by, for example, a joint region of a fuel pipe, it is desired to arrange rubber layers on both sides thereof. The inside and outside rubber

layers may be the same or different in kind.

About the tri-layered structure of (A)-(B)-(C1), the rubber layer (C1) is preferably a layer made of NBR or HNBR.

A fuel pipe is improved in chemical resistance and fuel low permeability by making the pipe into an (A)-(B)-(C1) type structure and arranging the rubber layer (C1) that is a fluorine-contained rubber layer as an inside layer of the pipe.

(3) Tri-layered structure of resin layer-rubber layer (A)-resin layer

This structure is a tri-layered structure of (B) - (A) - (B), and the inside and outside resin layers may be the same or different in kind.

(4) Tri-layered structure of fluororesin layer (B)-rubber layer (A)-rubber layer (C1)

(5) Quarter-layered structure, or any higher-layered structure

In accordance with purpose, any rubber layer (A) or (C), or any resin layer (B) may be further laminated onto each of the tri-layered structures (2) to (4). A metal foil piece or some other layer may be laminated thereonto, or an adhesive layer may be interposed between the layers except between the rubber layer (C) and the fluororesin layer (B).

Each of the tri-layered structures may be laminated onto a polymer layer (C) to produce a lining body.

The thickness, the shape and other factors of each of the layers may be appropriately selected in accordance with the use purpose or use form of the laminated body, and others.

A reinforcing layer of, for example, reinforcing thread may be appropriately laid to improve the pressure resistance.

The laminated body of the present invention, particularly, the vulcanized laminated body thereof is excellent in not only fuel low permeability but also heat resistance, oil resistance, fuel oil resistance, LLC resistance, steam resistance, weather resistance, and ozone resistance, and can sufficiently endure even when used under severe conditions. Thus, the laminated body is usable for various articles.

The laminated body has properties suitable for seals for gaskets, noncontact-type or contact-type packings (such as self-sealing packings, piston rings, split-ring shaped packings, mechanical seals, oil seals, and others), bellows, diaphragms, hoses, tubes, electrical wires, and others, which each require heat resistance, oil resistance, fuel oil resistance, LLC resistance and steam resistance, for basic electrical components, control-system electrical components, and accessory electrical components of electrical equipment in an engine body, a main moving system, a mobile valve system, lubricant / cooling systems, a fuel system, induction / exhaust systems and others of an engine for an automobile, a transmission system and others of a driving system, a steering system of a car chassis, a braking system, and others.

Specifically, the laminated body is usable in, for example, the following articles:
A cylinder head gasket, a cylinder head cover gasket and an oil pan packing, gaskets such as a general gasket, O-rings, packings, seals for, for example, a timing belt cover gasket, a control hose, other hoses, a vibration-proof rubber of an engine mount, and a sealing material for a high-pressure valve inside a hydrogen storing system in the engine body.

Shaft seals, such as a crank shaft seal, and a cam shaft seal in the main moving system.

Valve stem seals of an engine valve in the mobile valve system.

An engine oil cooler hose, an oil return hose, a seal gasket and others of an engine oil cooler, a water hose around a radiator, and a vacuum pump oil hose of a vacuum pump in the lubricant / cooling systems.

An oil seal, a diaphragm, a valve and others of a fuel pump, a filler (neck) hose, a fuel supply hose, a fuel return hose, a vapor (evaporating) hose and other fuel hoses, an in-tank hose, a filler seal, a tank packing, an in-tank fuel pump mount and others of a fuel tank, a tube body, a connector O-ring and others of a fuel piping tube, an injector cushion ring, an injector seal ring, an injector O-ring, a pressure regulator diaphragm, a check valve and others of a fuel injection system, a needle valve flower petal, an accelerator pump piston, a flange gasket, a control hose and others of a carburetor, a valve seat, a diaphragm and others of a composite air control system (CAC) in the fuel system. The laminated body is particularly suitable for a fuel hose, and in-tank hose of a fuel tank.

An intake manifold packing and an exhaust manifold packing of a manifold, a diaphragm, a control hose, an emission control hose and others of an EGR (exhaust gas re-circulator), a diaphragm and others of a BPT, an afterburn preventing valve seat and others of an AB valve, a throttle body packing of a throttle, and a turbo oil (supply) hose, a turbo oil (return) hose, a turbo air hose, an inter cooler hose, a turbine shaft seal and others of a turbo charger in the induction / exhaust systems,

A bearing seal, an oil seal, an O-ring, a packing, a torque converter hose related to a transmission, and a transmission oil hose, an ATF hose, an O-ring, a packing and others of an AT in the transmission system.

A power steering oil hose and others in the steering system.

An oil seal, an O-ring, a packing and a braking oil hose, an atmospheric valve, a vacuum valve, a diaphragm and others of a masterback, a piston cup (rubber cup) and others of a master cylinder, a caliper seal, and boots in the

braking system.

Insulators or sheathes of electrical wires (harness) as the basic electrical components, and tubes of harness exterior components.

Coating materials of various sensor lines as the control system electrical components.

An O-ring, a packing, and a cooler hose of a car air-conditioner as one of the accessory electrical components, and a wiper blade as an exterior component.

The laminated body is suitable for the following besides the automobile articles: packings, O-rings, hoses, other sealing materials, diaphragms, and valves for oil resistance, chemical resistance, heat resistance, steam resistance or weather resistance in transportations such as ships and aircrafts; packings, O-rings, sealing materials, diaphragms, valves, hoses, rolls, tubes, coatings for chemical resistance, and linings for the same in chemical plants; packings, O-rings, hoses, sealing materials, belts, diaphragms, valves, rolls, and tubes for the same in food plant machinery, and food machinery (including household articles); packings, O-rings, hoses, sealing materials, diaphragms, valves, and tubes for the same in atomic energy plant machinery; packings, O-rings, hoses, sealing materials, diaphragms, valves, rolls, tubes, linings, mandrels, electrical wires, flexible joints, belts, rubber plates, weather strips, and roll blades of PPC copying machines for the same in OA machinery, and general industrial components . For example, a backup rubber material of a PTFE diaphragm is poor in slipping property to cause a problem that the material is worn away or broken when used. However, the use of the laminated body of the present invention makes it possible to overcome this problem. Thus, the laminated body is favorably usable.

In the use of food rubber sealing material, there is conventionally caused a trouble that from the rubber sealing material a smell, a rubber broken-chip and others may be incorporated into food. However, the use of the laminated body of the present invention makes it possible to overcome this problem. Thus, the laminated body is favorably usable. A rubber material as a sealing material for a pipe in which a rubber sealing material solvent is used for a medicinal or chemical purpose has a problem that the material swells in the solvent. However, by the use of the laminated body of the present invention, its resin covers the rubber material, thus overcoming the problem. In the general industrial field, the laminated body is usable suitably for a rubber roll, an O-ring, a packing, a sealing material and others to improve the rubber material in strength, slipping property, chemical resistance and permeating performance. The laminated body is usable suitably, particularly, for a packing of a lithium ion battery since the body can maintain both of chemical resistance and sealing performance simultaneously. The laminated body is usable suitably for other articles for which sliding performance based on low friction is required.

The laminated body is usable suitably, particularly, for any tube or hose out of such articles. In other words, the laminated body is preferably made into tubes or hoses. The laminated body is usable suitably for a fuel piping tube or hose for an automobile, among the tubes, from the viewpoint of the heat resistance and the fuel low permeability thereof.

The fuel pipe made of the laminated body of the present invention may be produced by a usual method. The producing method is not particularly limited.

EXAMPLES

The following will describe the present invention by way of working examples. However, the present invention is not limited only to the examples.

Hereinafter, a description will be made about a fluororesin used in each of the working examples, and comparative examples, and measuring methods thereof.

(1) Melting point

A Seiko-type DSC instrument was used to record a melting heat peak when the temperature of the resin was raised at a rate of 10°C/min. The temperature corresponding to the maximum value was defined as the melting point.

(2) MFR (melt flow rate)

A Melt Indexer (manufactured by Toyo Seiki Seisaku-sho, Ltd.) was used to measure the weight (g) of the polymer flowing out, per unit period (10 minutes), from its nozzle having a diameter of 2 mm and a length of 8 mm under a load of 5 kg at each temperature.

(3) Measurement of fuel permeability coefficient of monolayer

Pellets of the resin were each put into a mold having a diameter of 120 mm, and the mold was set into a press machine heated to 300°C. The resin was melt-pressed at a pressure of about 2.9 MPa to yield a sheet having a thickness of 0.15 mm. The resultant sheet was put into a permeability coefficient measuring cup, made of SUS 316 and having

an inside diameter of 40 mm and a height of 20 mm, in which 18 mL of CE10 (fuel obtained by mixing a mixture of isooctane and toluene having a ratio by volume of 50/50 with 10% by volume of ethanol) was put. A change in the mass was measured at 60°C up to 1000 hours . The fuel permeability coefficient (g·mm/m$^2$/day) was calculated out from the mass change per unit period, the surface area of the liquid-contacting area of the sheet, and the thickness of the sheet.

The respective fluororesins in the working examples and the comparative examples are resins shown in Table 1 described below.

[Table 1]

| | Fluorine-contained polymer | Melting point (°C) | MFR (g/10 minutes) (measurement temperature) | Fuel permeation coefficient (g-mm/m$^2$/day) | Fluororesin sheet thickness (μm) |
|---|---|---|---|---|---|
| Fluororesin (1) | CTFE/TFE/PPVE copolymer 21.3/76.3/2.4(% by mole) | 246 | 29.2 (297°C) | 0.4 | 120 |
| Fluororesin (2) | CTFE/TFE/PPVE copolymer 21.3/76.3/2.4(% by mole) | 246 | 7.5 (297°C) | 0.4 | 120 |

(Rubber compositions for vulcanization 1 to 8, and A to C)

An 8 inch open roll, the temperature of which was adjusted to 40°C, was used to mix and knead some materials shown in Table 2 described below to yield each of rubber composition 1 to 8 and A to C for vulcanization having a thickness of about 3 mm. In Table 2, each number represents a value of part(s) by mass of one of the materials.

(Examples 1 to 8, and Comparative Example 3)

The sheets of each of the rubber compositions for vulcanization shown in Table 2, the respective thicknesses of which were about 3 mm, were put onto the fluororesin sheets, respectively, the thickness of each of which is shown in Table 1. In each of the resultant laminate bodies, at one of its ends, a resin film (releasing film having a thickness of 10 μm) having a width of about 10 to 15 mm was sandwiched between the two sheets . Thereafter, the resultant sheet was inserted into a mold in which a spacer made of a metal was set, so as to give a thickness of 2 mm. The mold was pressed at 170°C for 15 minutes to yield a sheet form laminated body. The resultant laminated body was cut into three strips each having a width of 10 mm × a length of 40 mm. From each of the strips, the releasing film was peeled to form a test piece in which the peeled region was used as a hand holding margin. About each of the test pieces, an autograph (AGS-J 5 kN, manufactured by Shimadzu Corp.) was used to make a peeling test thereof at 25°C and a tensile speed of 50 mm/min in accordance with a method described in JIS-K-6256 (Adhesive Test Method for Crosslinked Rubber) . The mode of the peel was observed and the test piece was evaluated on the basis of a criterion described below. The obtained results are shown in Table 2.

(Adhesion evaluation)

○: In the interface of the laminated body, the material of the rubber composition for vulcanization or the fluororesin was broken, and the layers were unable to be peeled from each other in the interface.
×: The layers were relatively easily peeled from each other in the interface of the laminated body.

[Table 2]

| | Example 1 | Example 2 | Example 3 | Example 4 | Example 5 | Example 6 | Example 7 | Example 8 | Comparative Example 1 | Comparative Example 2 | Comparative Example 3 |
|---|---|---|---|---|---|---|---|---|---|---|---|
| Rubber composition for vulcanization No. | 1 | 2 | 3 | 4 | 5 | 6 | 7 | 8 | A | B | C |
| Material name | PHR | PHR | PHR | PHR | PHR | PHR | PHR | PHR | PHR | PHR | PHR |
| Epichlorohydrin rubber *1 (a1) | 100 | 100 | 100 | 100 | 100 | 100 | 100 | 100 | 100 | 100 | 100 |
| FEF carbon *2 (Filler) | 50 | 50 | 50 | 50 | 50 | 50 | 50 | 50 | 50 | 50 | 50 |
| Hard Clay *8 (Filler) | | | | | | | 20 | | | | |
| Plasticizer *3 | 10 | 10 | 10 | 10 | 10 | 10 | 10 | 10 | 10 | 10 | 10 |
| Working auxiliary *4 | 3 | 3 | 3 | 3 | 3 | 3 | 3 | 3 | 3 | 3 | 3 |
| Nickel dibutyldithiocarbamate (Promoter) | 1 | 1 | 1 | 1 | 1 | 1 | 1 | 1 | 1 | 1 | 1 |
| Copper stearate (a5) | | | | | | 0.1 | | | | | |
| Copper dimethyldithiocarbamate (a5) | 0.1 | 0.1 | 0.1 | 0.1 | 0.1 | | 0.1 | 0.1 | 0.1 | 0.1 | 0.1 |
| Synthetic hydrotalcite *5 (Acid-receiving agent) | 3 | 3 | 3 | 3 | 3 | 3 | 3 | 3 | 3 | 3 | 3 |
| Magnesium oxide (Acid-receiving agent) | 3 | 3 | 3 | 3 | 3 | 3 | 3 | 3 | 3 | 3 | 3 |
| Epichlomer A kneaded compound, subtotal | 170.1 | 170.1 | 170.1 | 170.1 | 170.1 | 170.1 | 190.1 | 170.1 | 170.1 | 170.1 | 170.1 |

(continued)

| | Example 1 | Example 2 | Example 3 | Example 4 | Example 5 | Example 6 | Example 7 | Example 8 | Comparative Example 1 | Comparative Example 2 | Comparative Example 3 |
|---|---|---|---|---|---|---|---|---|---|---|---|
| N-Cyclohexylthiophtalimide (Retardant) | 1 | 1 | 1 | 1 | 1 | 1 | 1 | 1 | 1 | 1 | 1 |
| Quinoxaline vulcanizing agent *6 (a6) | 1.7 | 1.7 | 1.7 | 1.7 | 1.7 | 1.7 | 1.7 | 1.7 | 1.7 | 1.7 | 1.7 |
| Epoxy resin *7 (a3) | 1.5 | 1.5 | 1.5 | 1.5 | 1.5 | 1.5 | 1.5 | 1.5 | 1.5 | 1.5 | |
| Calcium sulfate dihydrate (a4) | 5.0 | 20.0 | | | 5.0 | 5.0 | 5.0 | | | 5.0 | 5.0 |
| Magnesium sulfate heptahydrate (a4) | | | 5.0 | | | | | | | | |
| Sodium sulfate decahydrate (a4) | | | | | | | | 5.0 | | | |
| Calcium acetate monohydrate (a4) | | | | 5.0 | | | | | | | |
| DBU-phenol salt (a2) | 1.0 | 1.0 | 1.0 | 1.0 | | 1.0 | 1.0 | 1.0 | 1.0 | | 1.0 |
| DBU-formic acid salt (a2) | | | | | 1.0 | | | | | | |
| Total | 180.3 | 195.3 | 180.3 | 180.3 | 180.3 | 180.3 | 200.3 | 180.3 | 175.3 | 179.3 | 178.8 |
| Fluororesin (1) (B) | ○ | ○ | ○ | ○ | ○ | ○ | ○ | ○ | × | × | × |

(continued)

| | Example 1 | Example 2 | Example 3 | Example 4 | Example 5 | Example 6 | Example 7 | Example 8 | Comparative Example 1 | Comparative Example 2 | Comparative Example 3 |
|---|---|---|---|---|---|---|---|---|---|---|---|
| Fluororesin (2) (B) | ○ | ○ | ○ | ○ | ○ | ○ | ○ | ○ | × | × | × |

Compounding agents used in the working examples and the comparative examples are shown below.
*1 "Epichlomer CG", manufactured by Daiso Co., Ltd.
*2 "Seast SO", manufactured by Tokai Carbon Co., Ltd.
*3 "Adeka Seizure RS107", manufactured by Adeka Corp.
*4 "Splendor R300", manufactured by Kao Corp.
*5 "DHT-4A", manufactured by Kyowa Chemical Industry Co., Ltd.
*6 "Daisonet XL-21S", manufactured by Daiso Co., Ltd.
*7 "JER 828", manufactured by Mitsubishi Chemical Corp.
*8 "Burgess #30", manufactured by Shiraishi Calcium Kaisha, Ltd.

INDUSTRIAL APPLICABILITY

The laminated body of the present invention, particularly, the vulcanized laminated body thereof is excellent in not only fuel low permeability but also heat resistance, oil resistance, fuel oil resistance, LLC resistance, and steam resistance. The laminated body is usable for seals for gaskets, noncontact-type or contact-type packings (such as self-sealing packings, piston rings, split-ring shaped packings, mechanical seals, oil seals, and others), bellows, diaphragms, hoses, tubes, electrical wires, and others, which each require heat resistance, oil resistance, fuel oil resistance, LLC resistance and steam resistance, for basic electrical components, control-system electrical components, and accessory electrical components of electrical equipment in an engine body, a main moving system, a mobile valve system, lubricant / cooling systems, a fuel system, induction / exhaust systems and others of an engine for an automobile, a transmission system and others of a driving system, a steering system of a car chassis, a braking system, and others.

## Claims

1. A laminated body, comprising a rubber layer (A) and a fluororesin layer (B) laminated over the rubber layer (A), wherein the rubber layer (A) is a layer comprising a rubber composition for vulcanization,
the rubber composition for vulcanization comprises an epichlorohydrin rubber (a1), at least one compound (a2) selected from the group consisting of salts of 1,8-diazabicyclo(5.4.0) undecene-7, salts of 1,5-diazabicyclo(4.3.0)-nonene-5,1,8-diazabicyclo(5.4.0) undecene-7, and 1,5-diazabicyclo(4.3.0)-nonene-5,an epoxy resin (a3), and at least one water-carrying substance (a4) and
the fluororesin layer (B) is a layer comprising a fluorine-contained polymer composition and the fluorine-contained polymer composition comprises a fluorine-contained polymer (b1) having a copolymerization unit originating from chlorotrifluoroethylene,
**characterized in that**
the water-carrying substance (a4) is selected from a hydrate of a sulfate and/or acetate of a metal selected from calcium, magnesium, sodium and copper.

2. The laminated body according to claim 1, wherein the rubber composition for vulcanization further comprises a copper salt (a5).

3. The laminated body according to claim 2, wherein the copper salt (a5) is an organic copper salt.

4. The laminated body according to claim 2 or 3, wherein the copper salt (a5) is at least one selected from copper salts of any saturated carboxylic acid, copper salts of any unsaturated carboxylic acid, copper salts of any aromatic carboxylic acid, and copper salts of any thiocarbamic acid.

5. The laminated body according to any one of claims 2 to 4, wherein the copper salt (a5) is at least one selected from copper stearate, copper dimethyldithiocarbamate, copper diethyldithiocarbamate, and copper dibutyldithiocarbamate.

6. The laminated body according to any one of claims 2 to 5, wherein the amount of the copper salt (a5) is from 0.01 to 3 parts both inclusive by mass for 100 parts by weight of the epichlorohydrin rubber (a1).

7. The laminated body according to any one of claims 1 to 6, wherein the compound (a2) is at least one compound selected from the group consisting of a p-toluenesulfonic acid salt of 1,8-diazabicyclo(5.4.0) undecene-7, a phenol salt of 1,8-diazabicyclo(5.4.0) undecene-7, a phenolic resin salt of 1,8-diazabicyclo(5.4.0) undecene-7, an orthophthalic acid salt of 1,8-diazabicyclo(5.4.0) undecene-7, a formic acid salt of 1,8-diazabicyclo(5.4.0) undecene-7, an octylic acid salt of 1,8-diazabicyclo(5.4.0) undecene-7, a p-toluenesulfonic acid salt of 1,5-diazabicyclo(4.3.0)-nonene-5, a phenol salt of 1,5-diazabicyclo(4.3.0)-nonene-5, a phenolic resin salt of 1,5-diazabicyclo(4.3.0)-nonene-5, an orthophthalic acid salt of 1,5-diazabicyclo(4.3.0)-nonene-5, a formic acid salt of 1,5-diazabicyclo(4.3.0)-nonene-5, an octylic acid salt of 1,5-diazabicyclo(4.3.0)-nonene-5, 1,8-diazabicyclo(5.4.0) undecene-7, and 1,5-diazabicyclo(4.3.0)-nonene-5.

8. The laminated body according to any one of claims 1 to 7, wherein the amount of the compound (a2) is from 0.5 to 3.0 parts both inclusive by mass for 100 parts by mass of the epichlorohydrin rubber (a1).

9. The laminated body according to any one of claims 1 to 8, wherein the rubber composition for vulcanization further

comprises at least one vulcanizing agent (a6) selected from the group consisting of thiourea vulcanizing agents, quinoxaline vulcanizing agents, sulfur-contained vulcanizing agents, peroxide vulcanizing agents, and bisphenol vulcanizing agents.

**10.** The laminated body according to any one of claims 1 to 9, wherein the epichlorohydrin rubber (a1) is a polymer having a polymerization unit based on epichlorohydrin, and a polymerization unit based on ethylene oxide.

**11.** The laminated body according to any one of claims 1 to 10, wherein the epichlorohydrin rubber (a1) is a polymer having a polymerization unit based on epichlorohydrin, a polymerization unit based on ethylene oxide, and a polymerization unit based on allyl glycidyl ether.

**12.** The laminated body according to any one of claims 1 to 11, wherein the fluorine-contained polymer (b1) is chlorotrifluoroethylene / tetrafluoroethylene / perfluoro(alkyl vinyl ether) copolymer.

**13.** The laminated body according to any one of claims 1 to 12, wherein the rubber layer (A) is laminated at both sides of the fluororesin layer (B).

**14.** The laminated body according to any one of claims 1 to 12, wherein the rubber layer (A) is laminated at one of both sides of the fluororesin layer (B), and a polymer layer (C) other than the rubber layer (A) and the fluororesin layer (B) is laminated at the other side.

**15.** The laminated body according to claim 14, wherein the polymer layer (C) comprises an acrylonitrile / butadiene rubber, or a hydrogenated product thereof.

**16.** The laminated body according to any one of claims 1 to 12, wherein the rubber layer (A) is laminated at both sides of the fluororesin layer (B) and a polymer layer (C) different from the former polymer layer (B) is laminated at both sides or a single side thereof.

**17.** The laminated body according to any one of claims 1 to 12, wherein the fluororesin layer (B) is laminated at both sides of the rubber layer (A).

**18.** A laminated body obtained by subjecting the laminated body recited in any one of claims 1 to 17to vulcanizing treatment, wherein a rubber layer (Al) obtained by vulcanizing the rubber layer (A), and the fluororesin layer (B) are vulcanized and bonded to each other.

**19.** The laminated body according to any one of claims 1 to 18, which is a tube or a hose.

**20.** The laminated body according to any one of claims 1 to 18, which is a fuel piping tube or hose for an automobile.

**Patentansprüche**

**1.** Laminierter Körper, umfassend eine Kautschukschicht (A) und eine Fluorharzschicht (B), die über die Kautschukschicht (A) laminiert ist, wobei die Kautschukschicht (A) eine Schicht ist, die eine Kautschukzusammensetzung zur Vulkanisation umfasst,
die Kautschukzusammensetzung zur Vulkanisation einen Epichlorhydrin-Kautschuk (a1), mindestens eine Verbindung (a2), die aus der Gruppe bestehend aus Salzen von 1,8-Diazabicyclo(5.4.0)undec-7-en, Salzen von 1,5-Diazabicyclo(4.3.0)non-5-en, 1,8-Diazabicyclo(5.4,0)undec-7-en und 1,5-Diazabicyclo(4.3.0)non-5-en ausgewählt ist, ein Epoxidharz (a3) und mindestens eine wassertragende Substanz (a4) umfasst und
die Fluorharzschicht (B) eine Schicht ist, die eine fluorhaltige Polymerzusammensetzung umfasst, und die fluorhaltige Polymerzusammensetzung ein fluorhaltiges Polymer (b1) mit einer Copolymerisationseinheit, die von Chlortrifluorethylen stammt, umfasst,
**dadurch gekennzeichnet, dass**
die wassertragende Substanz (a4) aus einem Hydrat eines Sulfats und/oder Acetats eines Metalls ausgewählt ist, das aus Calcium, Magnesium, Natrium und Kupfer ausgewählt ist.

**2.** Laminierter Körper nach Anspruch 1, wobei die Kautschukzusammensetzung zur Vulkanisation ferner ein Kupfersalz (a5) umfasst.

3. Laminierter Körper nach Anspruch 2, wobei das Kupfersalz (a5) ein organisches Kupfersalz ist.

4. Laminierter Körper nach Anspruch 2 oder 3, wobei das Kupfersalz (a5) mindestens ein aus Kupfersalzen einer beliebigen gesättigten Carbonsäure, Kupfersalzen einer beliebigen ungesättigten Carbonsäure, Kupfersalzen einer beliebigen aromatischen Carbonsäure und Kupfersalzen einer beliebigen Thiocarbaminsäure ausgewähltes ist.

5. Laminierter Körper nach einem der Ansprüche 2 bis 4, wobei das Kupfersalz (a5) mindestens ein aus Kupferstearat, Kupferdimethyldithiocarbamat, Kupferdiethyldithiocarbamat und Kupferdibutyldithiocarbamat ausgewähltes ist.

6. Laminierter Körper nach einem der Ansprüche 2 bis 5, wobei die Menge des Kupfersalzes (a5) von 0,01 bis 3 Massenteile, beide eingeschlossen, auf 100 Gewichtsteile des Epichlorhydrin-Kautschuks (a1) beträgt.

7. Laminierter Körper nach einem der Ansprüche 1 bis 6, wobei die Verbindung (a2) mindestens eine Verbindung ist, die aus der Gruppe bestehend aus einem p-Toluolsulfonsäuresalz von 1,8-Diazabicyclo(5.4.0)undec-7-en, einem Phenolsalz von 1,8-Diazabicyclo(5.4.0)undec-7-en, einem Phenolharzsalz von 1,8-Diazabicyclo(5.4.0)undec-7-en, einem Orthophthalsäuresalz von 1,8-Diazabicyclo(5.4,0)undec-7-en, einem Ameisensäuresalz von 1,8-Diazabicyclo(5.4.0)undec-7-en, einem Octansäuresalz von 1,8-Diazabicyclo(5.4.0)undec-7-en, einem p-Toluolsulfonsäuresalz von 1,5-Diazabicyclo(4.3.0)non-5-en, einem Phenolsalz von 1,5- Diazabicyclo(4.3.0)non-5-en, einem Phenolharzsalz von 1,5- Diazabicyclo(4.3.0)non-5-en, einem Orthophthalsäuresalz von 1,5- Diazabicyclo(4.3.0)non-5-en, einem Ameisensäuresalz von 1,5- Diazabicyclo(4.3.0)non-5-en, einem Octansäuresalz von 1,5-Diazabicyclo(4,3.0)non-5-en, 1,8-Diazabicyclo(5.4.0)undee-7-en und 1,5-Diazabicyclo(4.3.0)non-5-en ausgewählt ist.

8. Laminierter Körper nach einem der Ansprüche 1 bis 7, wobei die Menge der Verbindung (a2) von 0,5 bis 3,0 Massenteile, beide eingeschlossen, auf 100 Massenteile des Epichlorhydrin-Kautschuks (a1) beträgt.

9. Laminierter Körper nach einem der Ansprüche 1 bis 8, wobei die Kautschukzusammensetzung zur Vulkanisation ferner mindestens ein Vulkanisationsmittel (a6) umfasst, das aus der Gruppe bestehend aus Thioharnstoff-Vulkanisationsmitteln, Chinoxalin-Vulkanisationsmitteln, schwefelhaltigen Vulkanisationsmitteln, Peroxid-Vulkanisationsmitteln und Bisphenol-Vulkanisationsmitteln ausgewählt ist.

10. Laminierter Körper nach einem der Ansprüche 1 bis 9, wobei der Epichlorhydrin-Kautschuk (a1) ein Polymer mit einer Polymerisationseinheit auf Epichlorhydrin-Basis und einer Polymerisationseinheit auf Ethyienoxid-Basis ist.

11. Laminierter Körper nach einem der Ansprüche 1 bis 10, wobei der Epichlorhydrin-Kautschuk (a1) ein Polymer mit einer Polymerisationseinheit auf Epichlorhydrin-Basis, einer Polymerisationseinheit auf Ethylenoxid-Basis und einer Polymerisationseinheit auf Allylglycidylether-Basis ist.

12. Laminierter Körper nach einem der Ansprüche 1 bis 11, wobei das fluorhaltige Polymer (b1) ein Chlortrifluorethylen/Tetrafluorethylen/Perfluor(alkylvinylether)-Copolymer ist.

13. Laminierter Körper nach einem der Ansprüche 1 bis 12, wobei die Kautschukschicht (A) auf beide Seiten der Fluorharzschicht (B) laminiert ist.

14. Laminierter Körper nach einem der Ansprüche 1 bis 12, wobei die Kautschukschicht (A) auf eine von beiden Seiten der Fluorharzschicht (B) laminiert ist und eine Polymerschicht (C), welche nicht die Kautschukschicht (A) und die Fluorharzschicht (B) ist, auf die andere Seite laminiert ist.

15. Laminierter Körper nach Anspruch 14, wobei die Polymerschicht (C) einen Acrylnitril/Butadien-Kautschuk oder ein hydriertes Produkt davon umfasst.

16. Laminierter Körper nach einem der Ansprüche 1 bis 12, wobei die Kautschukschicht (A) auf beide Seiten der Fluorharzschicht (B) laminiert ist und eine Polymerschicht (C), die sich von der vorherigen Polymerschicht (B) unterscheidet, auf beide Seiten oder eine einzige Seite davon laminiert ist.

17. Laminierter Körper nach einem der Ansprüche 1 bis 12, wobei die Fluorharzschicht (B) auf beide Seiten der Kautschukschicht (A) laminiert ist.

18. Laminierter Körper, der durch Unterziehen des in einem der Ansprüche 1 bis 17 dargelegten laminierten Körpers

einer Vulkanisationsbehandlung erhalten wird, wobei eine Kautschukschicht (A1), die durch Vulkanisieren der Kautschukschicht (A) erhalten wird, und die Fluorharzschicht (B) vulkanisiert und miteinander verbunden werden.

**19.** Laminierter Körper nach einem der Ansprüche 1 bis 18, der ein Rohr oder ein Schlauch ist.

**20.** Laminierter Körper nach einem der Ansprüche 1 bis 18, der ein/e Kraftstoffrohrleitung oder -schlauch für ein Kraftfahrzeug ist.

## Revendications

**1.** Corps stratifié, comprenant une couche de caoutchouc (A) et une couche de fluororésine (B) stratifiée sur la couche de caoutchouc (A), dans lequel la couche de caoutchouc (A) est une couche comprenant une composition de caoutchouc pour une vulcanisation,
la composition de caoutchouc pour une vulcanisation comprend un caoutchouc d'épichlorhydrine (a1), au moins un composé (a2) choisi dans le groupe consistant en sels de 1,8-diazabicyclo(5.4.0)undécène-7, sels de 1,5-diazabicyclo(4.3.0)-nonène-5, 1,8-diazabicyclo(5.4.0)-undécène-7, et 1,5-diazabicyclo(4.3.0)-nonène-5, une résine époxy (a3), et au moins une substance porteuse de l'eau (a4) et
la couche de fluororésine (B) est une couche comprenant une composition de polymère contenant du fluor et la composition de polymère contenant du fluor comprend un polymère contenant du fluor (b1) présentant une unité de copolymérisation provenant de chlorotrifluoroéthylène,
**caractérisé en ce que**
la substance porteuse de l'eau (a4) est choisie parmi un hydrate d'un sulfate et/ou acétate d'un métal choisi parmi le calcium, le magnésium, le sodium et le cuivre.

**2.** Corps stratifié selon la revendication 1, dans lequel la composition de caoutchouc pour une vulcanisation comprend de plus un sel de cuivre (a5).

**3.** Corps stratifié selon la revendication 2, dans lequel le sel de cuivre (a5) est un sel de cuivre organique.

**4.** Corps stratifié selon la revendication 2 ou 3, dans lequel le sel de cuivre (a5) est au moins un choisi parmi des sels de cuivre d'un acide carboxylique saturé, des sels de cuivre d'un acide carboxylique insaturé, des sels de cuivre d'un acide carboxylique aromatique, et des sels de cuivre d'un acide thiocarbamique.

**5.** Corps stratifié selon l'une quelconque des revendications 2 à 4, dans lequel le sel de cuivre (a5) est au moins un choisi parmi le stéarate de cuivre, le diméthyldithiocarbamate de cuivre, le diéthyldithiocarbamate de cuivre, et le dibutyldithiocarbamate de cuivre.

**6.** Corps stratifié selon l'une quelconque des revendications 2 à 5, dans lequel la quantité du sel de cuivre (a5) est de 0,01 à 3 parties les deux inclus en masse pour 100 parties en masse du caoutchouc d'épichlorhydrine (a1).

**7.** Corps stratifié selon l'une quelconque des revendications 1 à 6, dans lequel le composé (a2) est au moins un composé choisi dans le groupe consistant en un sel d'acide p-toluènesulfonique de 1,8-diazabicyclo(5.4.0)undécène-7, un sel de phénol de 1,8-diazabicyclo(5.4.0)undécène-7, un sel de résine phénolique de 1,8-diazabicyclo(5.4.0)undécène-7, un sel d'acide orthophtalique de 1,8-diazabicyclo(5.4.0)undécène-7, un sel d'acide formique de 1,8-diazabicyclo(5.4.0)undécène-7, un sel d'acide octylique de 1,8-diazabicyclo(5.4.0)undécène-7, un sel d'acide p-toluènesulfonique de 1,5-diazabicyclo(4.3.0)-nonène-5, un sel de phénol de 1,5-diazabicyclo(4.3.0)-nonène-5, un sel de résine phénolique de 1,5-diazabicyclo(4.3.0)-nonène-5, un sel d'acide orthophtalique de 1,5-diazabicyclo(4.3.0)-nonène-5, un sel d'acide formique de 1,5-diazabicyclo(4.3.0)-nonène-5, un sel d'acide octylique de 1,5-diazabicyclo(4.3.0)-nonène-5, 1,8-diazabicyclo(5.4.0) undécène-7, et 1,5-diazabicyclo(4.3.0)-nonène-5.

**8.** Corps stratifié selon l'une quelconque des revendications 1 à 7, dans lequel la quantité du composé (a2) est de 0,5 à 3,0 parties les deux inclus en masse pour 100 parties en masse du caoutchouc d'épichlorhydrine (a1).

**9.** Corps stratifié selon l'une quelconque des revendications 1 à 8, dans lequel la composition de caoutchouc pour une vulcanisation comprend de plus au moins un agent de vulcanisation (a6) choisi dans le groupe consistant en agents de vulcanisation de thiourée, agents de vulcanisation de quinoxaline, agents de vulcanisation contenant du soufre, agents de vulcanisation de peroxyde, et agents de vulcanisation de bisphénol.

10. Corps stratifié selon l'une quelconque des revendications 1 à 9, dans lequel le caoutchouc d'épichlorhydrine (a1) est un polymère présentant une unité de polymérisation à base d'épichlorhydrine, et une unité de polymérisation à base d'oxyde d'éthylène.

11. Corps stratifié selon l'une quelconque des revendications 1 à 10, dans lequel le caoutchouc d'épichlorhydrine (a1) est un polymère présentant une unité de polymérisation à base d'épichlorhydrine, une unité de polymérisation à base d'oxyde d'éthylène, et une unité de polymérisation à base d'allylglycidyléther.

12. Corps stratifié selon l'une quelconque des revendications 1 à 11, dans lequel le polymère contenant du fluor (b1) est un copolymère de chlorotrifluoroéthylène/tétrafluoroéthylène/perfluoro(alkylvinyléther).

13. Corps stratifié selon l'une quelconque des revendications 1 à 12, dans lequel la couche de caoutchouc (A) est stratifiée sur les deux côtés de la couche de fluororésine (B).

14. Corps stratifié selon l'une quelconque des revendications 1 à 12, dans lequel la couche de caoutchouc (A) est stratifiée sur un des deux côtés de la couche de fluororésine (B), et une couche de polymère (C) différente de la couche de caoutchouc (A) et de la couche de fluororésine (B) est stratifiée sur l'autre côté.

15. Corps stratifié selon la revendication 14, dans lequel la couche de polymère (C) comprend un caoutchouc d'acrylonitrile/butadiène, ou un produit hydrogéné de celui-ci.

16. Corps stratifié selon l'une quelconque des revendications 1 à 12, dans lequel la couche de caoutchouc (A) est stratifiée sur les deux côtés de la couche de fluororésine (B) et une couche de polymère (C) différente de la couche de polymère précédente (B) est stratifiée sur les deux côtés ou sur un seul côté de celle-ci.

17. Corps stratifié selon l'une quelconque des revendications 1 à 12, dans lequel la couche de fluororésine (B) est stratifiée sur les deux côtés de la couche de caoutchouc (A).

18. Corps stratifié obtenu en soumettant le corps stratifié selon l'une quelconque des revendications 1 à 17 à un traitement de vulcanisation, dans lequel une couche de caoutchouc (A1) obtenue par vulcanisation de la couche de caoutchouc (A), et de la couche de fluororésine (B) sont vulcanisées et liées l'une à l'autre.

19. Corps stratifié selon l'une quelconque des revendications 1 à 18, lequel est un tuyau ou un flexible.

20. Corps stratifié selon l'une quelconque des revendications 1 à 18, qui est un tuyau ou un flexible de tuyauterie de carburant pour une automobile.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007261079 A
- JP 2001527104 A
- JP 2001526972 A
- US 6106914 A
- WO 2009096427 A1
- WO 2009020182 A1
- JP 3174018 A